(19) Europäisches Patentamt
European Patent Office
Office européen des brevets

(11) Veröffentlichungsnummer: **0 021 265**
**B1**

(12) # EUROPÄISCHE PATENTSCHRIFT

(45) Veröffentlichungstag der Patentschrift: **28.09.83**

(51) Int. Cl.³: **C 08 G 73/00**, D 21 H 3/48, D 21 F 1/82 // (C08G73/00, 71/02)

(21) Anmeldenummer: **80103279.8**

(22) Anmeldetag: **12.06.80**

(54) **Harnstoffgruppenhaltige Polyamine, sowie ihre Herstellung und Verwendung als Retentionsmittel und sie enthaltende Mittel.**

(30) Priorität: **25.06.79 DE 2925567**

(43) Veröffentlichungstag der Anmeldung: **07.01.81 Patentblatt 81/1**

(45) Bekanntmachung des Hinweises auf die Patenterteilung: **28.09.83 Patentblatt 83/39**

(84) Benannte Vertragsstaaten: **AT BE CH DE FR GB IT LI NL SE**

(56) Entgegenhaltungen:
**DE-A-1 595 791**
**US-A-3 734 889**
**US-A-3 966 684**

(73) Patentinhaber: **BAYER AG, Zentralbereich Patente, Marken und Lizenzen, D-5090 Leverkusen 1, Bayerwerk (DE)**

(72) Erfinder: **Löbach, Wilfried, Dr., Flutgraben 17, D-5300 Bonn 3 (DE)**
Erfinder: **Kolb, Günter, Dr., Heinrich-von-Kleist-Strasse 7, D-5090 Leverkusen 1 (DE)**
Erfinder: **Lehmann, Wolfgang, Dr., Carl-Rumpff-Strasse 7, D-5090 Leverkusen 1 (DE)**
Erfinder: **Cramm, Günter, Dr., Höhenstrasse 146, D-5090 Leverkusen 3 (DE)**
Erfinder: **Müller, Friedheim, Dr., Zum Hahnenberg 62, D-5068 Odenthal (DE)**
Erfinder: **Muszik, Janos, Dr., Gabriele-Münter-Strasse 12, D-5090 Leverkusen 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Harnstoffgruppenhaltige Polyamine sowie ...e Herstellung und Verwendung als Retentionsmittel und sie ...haltende Mittel

Die vorliegende Erfindung betrifft nicht vernetzende wasserlösliche Polyamine, welche erhalten werden durch Umsetzung von

A) basischen Polyharnstoffen, welche durch Kondensation von 1 Mol Harnstoff mit 0,7 bis 1,5 Mol Polyaminen, die
   a) mindestens drei Aminogruppen enthalten, von denen wenigstens eine eine tertiäre Aminogruppe ist, oder
   b) mit Mischungen dieser Polyamine a) mit zwei primären oder zwei sekundären Aminogruppen oder eine primäre und eine sekundäre Aminogruppe enthaltenden aliphatischen, araliphatischen, cycloaliphatischen oder heterocyclischen Polyaminen oder
   c) mit Polyaminmischungen aus a) oder a) und b) im weiteren Gemisch mit bis 0,5 Mol Polyalkylenpolyaminen der Reihe Diethylentriamin, Triethylentetramin und höhere Homologe, Dipropylentriamin, Tripropylentetramin und höhere Homologe pro Mol Harnstoff und anschließende Addition von ungesättigten Verbindungen wie Acrylsäure, Maleinsäureanhydrid oder Acrylamid an deren sekundäre Aminogruppe sowie gegebenenfalls mit mindestens drei Kohlenstoffatomen enthaltenden ω-Aminocarbonsäuren oder deren Lactamen

   hergestellt worden sind,

B) Polyalkylenpolyaminen der allgemeinen Formel

$$H_2N-\left[CH_2-\underset{\displaystyle R}{\underset{|}{C}H}-(CH_2)_y-NH\right]_x-H$$

in der

R H oder $CH_3$
Y gleich oder verschieden die Zahl 0 oder 1 und
x eine Zahl von 4 bis 2500 bedeuten

oder Mischungen dieser Polyalkylenpolyamine (I) mit Aminen der gleichen Formel (II), in der x eine Zahl von 1 bis 3 bedeutet oder Mischungen dieser Polyalkylenpolyamine I oder I und II mit weiteren mehrwertigen Aminen und

C) gegenüber Aminogruppen polyfunktionellen Verbindungen,
   wobei die basischen Harnstoffe A und die Polyalkylenpolyamine B in Gewichtsverhältnissen von 1 bis 10 : 10 bis 1 eingesetzt werden.

Die Erfindung betrifft ferner ein Verfahren zur Herstellung dieser ...erlöslichen Polyam... ...nd ihre Verwendung als Mittel zur Erhöhung der Retention von Fasern, F... ...toffen und Pigmenten ...wie zur Beschleunigung der Entwässerung bei der Papierherstellung und zur Aufarbeitung von Papiermaschinenabwässern durch Filtration, Sedimentation und Flotation.

Zur Herstellung der erfindungsgemäßen wasserlöslichen Polyamine werden höhermolekulare basische Polyharnstoffe, d. h. Polyharnstoffe, deren mittleres Molekulargewicht größer als 5000 ist, verwendet.

Als basische Polyharnstoffe kommen insbesondere in Betracht:

Umsetzungsprodukte von Harnstoffen mit Polyaminen A)a):

Methyl-bis-(3-aminopropyl)-amin, N-(2-aminoethyl)-piperazin, 4,7-Dimethyltriethylen-tetramin, Methyl-bis-(2-aminoethyl)-amin, Ethyl-bis-(3-aminopropyl)-amin, wobei die beiden erstgenannten Amine bevorzugt sind,

oder A)b):

Mischungen der Polyamine entsprechend A)a) mit vorzugsweise Ethylendiamin, 1,6-Diaminohexan, 1,4-Diaminocyclohexan, 1,2-Diaminopropan, 1,3-Bis-aminomethylbenzol bzw. Piperazin, wobei die Verwendung der beiden erstgenannten Polyamine bevorzugt ist.

Die Kondensationsreaktion von Polyamin mit Harnstoff wird vorzugsweise bei einem Molverhältnis von Polyamin zu Harnstoff von 1 : 1 ausgeführt, jedoch läßt sie sich auch bei einem Verhältnis von 1 : 0,7 bis 1 : 1,5 ausführen. Die Reaktionstemperatur kann von 120 bis 250°C variiert werden, vorzugsweise wird sie bei Temperaturen zwischen 140 und 190°C durchgeführt.

Als Polyalkylenpolyamine B der Formel

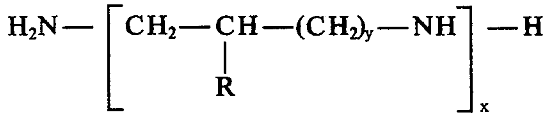

in der R=H oder $CH_3$, y gleich oder verschieden die Zahl 0 oder 1 und x=1 bis 3 bzw. 4 bis 2500 bedeuten, seien vor allem die Polyalkylenpolyamine genannt, bei denen y für null steht z. B. Ethylendiamin, Propylendiamin-1,2, Diethylentriamin, Dipropylentriamin, Triethylentetramin, Tripropylentetramin, Tetraethylenpentamin, Tetrapropylenpentamin, Pentaethylenhexamin, Pentapropylenhexamin, Hexaethylenheptamin, Heptaethylenoktamin, Heptapropylenoktamin und ihre Gemische sowie Polyethylenpolyamine, die zudem noch einen oder mehrere Piperazinringe enthalten, wie Aminoethylpiperazin, Pentaäthylenpentamin, Oktaethylenheptamin und deren Gemische, insbesondere aber

a) das bei der diskontinuierlichen (z. B. Houben—Weyl, 4. Auflage, XI/1, Seite 44) oder bei der kontinuierlichen (z. B. im GB-PS 1 832 534 und 2 049 467) Umsetzung von 1 Mol 1,2-Dichlorethan mit wäßrigem Ammoniak (6—30 Mol), gegebenenfalls in Gegenwart von zugesetztem Ethylendiamin oder Diethylentriamin (US-PS 2 769 341 und US-PS 3 484 488) erhaltene Polyethylenpolyamingemisch, das erhebliche Anteile an Tetraethylenpentamin, Pentaethylenhexamin, Hexaethylenhexamin, Hexaethylenheptamin, Heptaethylenheptamin und höhere Amine enthält, und vor allem
b) das nach Abdestillieren von Ethylendiamin, evtl. auch noch Diethylentriamin und Triethylentetramin aus dem gemäß a) hergestellten Basengemisch verbleibende Polyethylenpolyamingemisch,
c) die durch Kondensation von 1,2-Dichlorethan mit den oben genannten Polyethylenpolyaminen, einzeln oder im Gemisch, herstellbaren mehrwertigen oligomeren Amine mit einem mittleren Molekulargewicht von 1000 bis 10 000, insbesondere 2000 bis 5000,
d) die durch Polymerisation von 1,2-Alkyleniminen erhältlichen mehrwertigen Amine mit einem mittleren Molekulargewicht von 1000 bis 10 000, insbesondere 2000 bis 5000.

Als weitere Polyalkylenpolyamine der vorstehend genannten Formel seien noch genannt:

e) Reine Polypropylenpolyamine und deren Gemische und
f) gemischte Polyethylenpolypropylenpolyamine und deren Gemische, vor allem die durch ein- bzw. mehrmalige Umsetzung von Ethylendiamin bzw. Propylendiamin-1.3 mit Acrylnitril und jeweils nachfolgender Hydrierung erhalten sind, z. B. mehrwertigen Amine der Formel

$$H_2N-[CH_2-CH_2-CH_2-NH]_x-H$$

wobei x eine ganze Zahl von 1 bis 10 bedeutet

sowie diejenigen der Formel

$$H[NH-CH_2-CH_2-CH_2]_m-NH-CH_2-CH_2-NH-[CH_2-CH_2-CH_2-NH]_nH$$

wobei m eine ganze Zahl von 1 bis 5 und n eine ganze Zahl von 0 bis 5 bedeutet, außerdem
g) die durch Kondensation von 1,2-Dichlorethan mit der unter e) und f) genannten Polyalkylenpolyaminen, herstellbaren mehrwertigen Amine mit einem mittleren Molekulargewicht von 1000 bis 10 000, insbesondere 2000 bis 5000.

In manchen Fällen ist es von Vorteil, wenn ein Teil der zum Einsatz gelangenden Polyalkylenpolyamine B durch andersartige Di-, Tri-, Tetra-, Penta- oder Hexamine ersetzt wird, z. B. durch Amine der Formel

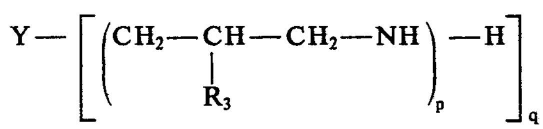

in der

Y für Sauerstoff, Schwefel oder den Rest einer mindestens zweiwertigen aliphatischen, cycloaliphatischen, araliphatischen oder aromatischen Hydroxyl und/oder Sulfhydrylgruppen aufweisenden Verbindung steht,
$R_3$ Wasserstoff oder die Methylgruppe bedeutet,
p eine ganze Zahl von mindestens 1, vorzugsweise 1—3, ist und
q für eine ganze Zahl von mindestens 2, vorzugsweise 2—4 steht.

Vertreter dieser Polyamine sind beispielsweise

Bis-(3-amino-propyl)-ether,
Bis-(3-aminopropyl)-sulfid,
Ethylenglykol-bis-(3-amino-propylether),
Dithioethylenglykol-bis-(3-aminopropylether),
Neopentylen-glykol-bis-(3-amino-propyl-ether),
Hexahydro-p-xylylen-glykol-bis-(3-amino-propylether) und
Hydrochinon-bis-(3-amino-propylether)
sowie Amine der Formel

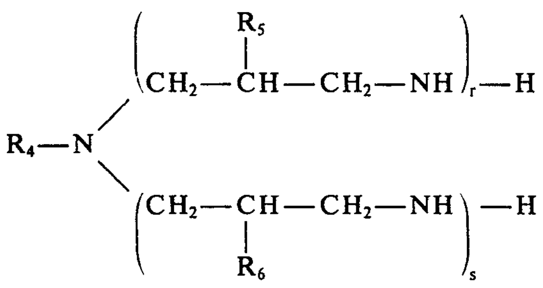

in der

$R_4$ für einen gegebenenfalls durch eine Amino- oder Hydroxygruppe substituierten $C_1-C_{18}$-Alkylrest und
$R_5$ u. $R_6$ unabhängig voneinander für Wasserstoff oder eine Methylgruppe stehen und
r u. s eine Zahl von 1 bis 20, vorzugsweise 2 bis 5, ist.

Vertreter dieser Polyamine sind beispielsweise

Ethyl-bis-(3-amino-propyl)-amin,
2-Hydroxyethyl-bis-(3-amino-propyl)-amin,
n-Butyl-bis-(3-amino-propyl)-amin,
Tris-(3-amino-propyl)-amin und
vor allem Methyl-bis-(3-amino-propyl)-amin.

Bei der Herstellung wasserlöslicher Polyamine werden die basischen Harnstoffe A und die Polyalkylenpolyamine B vorzugsweise im Gewichtsverhältnis von 1 bis 2,5 : 2,5 bis 1 und insbesondere von 1 bis 1,8 : 1,8 bis 1 eingesetzt.

Als gegenüber Aminogruppen polyfunktionelle Verbindungen C eignen sich zur Herstellung der erfindungsgemäßen Polyamine insbesondere solche polyfunktionellen Verbindungen, die in wäßriger Lösung bei pH-Werten über 6, vorzugsweise über 8, mit den in den basischen Polyamiden enthaltenen Aminogruppen vollständig zu reagieren vermögen.

Als gegenüber Aminogruppen polyfunktionellen Verbindungen seien beispielsweise genannt:

bifunktionelle Verbindungen, wie $\alpha,\omega$-Alkyldihalogenide, z. B. insbesondere 1.2-Dichlorethan, 1.2-Dibromethan, 1.2-Dichlorpropan, 1.3-Dichlorpropan, 1.6-Dichlorhexan; $\omega,\omega'$-Dihalogenether, z. B. 2,2'-Dichlor-diethylether, Bis-($\beta$-chlor-isopropyl)-ether, Bis-(4-chlor-butylether); Halogenhydrine bzw. Epihalogenhydrine, z. B. Epichlorhydrin, 1.3-Dichlorpropanol-(2), Bis-(3-chlor-2-hydroxypropyl)-ether, 1,4-Dichlor-2.3-epoxy-butan;
Bis-epoxy-Verbindungen, z. B. 1,2,3,4-Diepoxybutan, Diglycidylether, Ethan-1,2-bis-glycidylether;
$\omega$-Halogencarbonsäurehalogenide, z. B. Chloracetylchlorid, 2-Chlorpropionylchlorid, 3-Chlorpropionylchlorid, 3-Brom-propionylbromid;
Vinylverbindungen, z. B. Divinylether, Divinylsulfon, Methylenbisacrylamid;
weiterhin 4-Chlormethyl-1.3-dioxalanon-(2) und 2-Chlorethyl-chlorameisensäureester, ferner Chlorameisensäureester, 3-Chlor-2-hydroxypropylether und Glycidylether von Polyalkylenoxiden, z. B. Polyethylenoxiden, sowie von Umsetzungsprodukten von 1—50 Mol Alkylenoxiden, wie Ethylenoxid und/oder Propylenoxid, mit 1 Mol zwei- oder mehrwertiger Polyole oder anderer mindestens zwei aktive Wasserstoffatome enthaltender Verbindung;
trifunktionelle Verbindungen, wie 1,3,5-Triacryloylhexahydro-s-triazin, sowie bifunktionelle Alkylierungsmittel der Formel

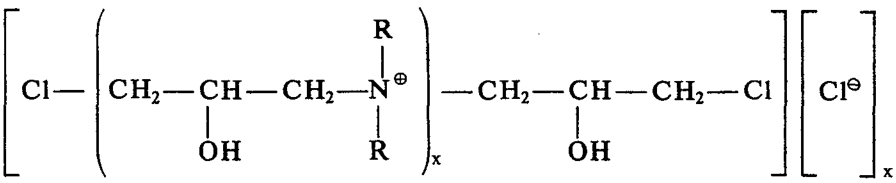

hergestellt nach US-PS 3 632 559, Beispiel 2, 1.

Besonders bevorzugte Verbindungen C sind Dichlorethan und Epichlorhydrin.

Die Mengenverhältnisse der polyfunktionellen Verbindungen zu den beiden Komponenten A und B werden zweckmäßigerweise so bemessen, daß die zur Bildung des gewünschten Kondensationsgrades des wasserlöslichen Polyamins nicht wesentlich überschritten werden. Die Mindestmenge an gegenüber Aminogruppen polyfunktionellen Verbindungen C, die anzuwenden sind, um Umsetzungsprodukte mit dem gewünschten hohen Molekulargewicht bzw. Lösungen derselben mit der angestrebten Viskosität (d. h. 100—1500 mPas, vorzugsweise 200—400 mPas einer 25%igen wäßrigen Lösung) zu erhalten, sind hauptsächlich vom Molekulargewicht der beiden Komponenten abhängig und lassen sich durch Vorversuche von Fall zu Fall leicht feststellen.

Wichtig ist dabei, daß alle funktionellen Gruppen der Verbindungen C abreagiert haben, so daß das Reaktionsprodukt praktisch frei von selbstvernetzenden Gruppen ist.

Die Herstellung der erfindungsgemäßen Polyamine aus den basischen Polyharnstoffen A und den Polyalkylenpolyaminen B kann nach an sich bekannten Verfahren erfolgen, z. B. dadurch, daß man Mischungen aus A, B und den gegenüber Aminogruppen polyfunktionellen Verbindungen C in wäßr. Medien bei pH-Werten über 6, einer Gesamtkonzentration von 10 bis 60% und bei Temperaturen zwischen 0 und 140°C so lange rührt, bis eine Probe der Reaktionsmischung in Form einer 10%igen wäßrigen Lösung bei 25°C eine Viskosität von mindestens 10 cP aufweist. Häufig ist es von Vorteil, wenn man zu der Mischung von A und B im wäßr. Milieu die polyfunktionellen Verbindungen unter sonst gleichen Reaktionsbedingungen portionsweise nach und nach zusetzt bis die gewünschte Viskosität erreicht ist. Der Gehalt der Reaktionslösung an Einwirkungsprodukten, der vorzugsweise zwischen 10 und 30 Gewichtsprozent liegt, wird dann, falls die Reaktion bei einer höheren Konzentration durchgeführt wurde, durch Verdünnen mit Wasser auf den gewünschten Endwert eingestellt. In manchen Fällen ist es zur Beendigung der Einwirkung nach Erreichen der angestrebten Viskosität notwendig, den pH-Wert der Reaktionslösung durch Zugabe von Säuren, z. B. Salzsäure, Schwefelsäure, Phosphorsäure oder Essigsäure, auf pH 6, vorzugsweise auf 4 bis 5 einzustellen. Dies trifft vor allem für den Fall zu, daß die zur Bildung des gewünschten Kondensationsgrades des wasserlöslichen Polyamins erforderliche Mindestmenge an funktionellen Verbindungen erheblich überschritten worden ist.

Die Kondensation kann aber auch in einem geschlossenen Gefäß bei Temperaturen oberhalb des Siedepunktes der gegenüber Aminogruppen polyfunktionelle Verbindung C, insbesondere bei Verwendung von Dihalogenalkanen, vorzugsweise zwischen 90—130°C bei Drücken bei 0—50 bar, vorzugsweise 3—8 bar, durchgeführt werden. Ein Abstoppen der Reaktion ist durch Zugabe von Säure hierbei normalerweise nicht erforderlich.

Die Gesamtkonzentration der Komponenten in der wäßrigen Reaktionsmischung sollte 10 bis 50 Gewichtsprozente betragen.

Bei der Herstellung der erfindungsgemäßen Reaktionsprodukte braucht die Umsetzung der polyfunktionellen Verbindung C nicht ungedingt mit einem Gemisch von A und B zu erfolgen. Es ist auch möglich, zunächst eine der beiden Komponenten A oder B mit der polyfunktionellen Verbindung C zu einem Vorkondensat reagieren zu lassen und dieses dann in zweiter Stufe mit der anderen Komponente umzusetzen.

Die erfindungsgemäßen Polyamine sind durch ein Mindestmolekulargewicht von 2500, vorzugsweise 5000, gekennzeichnet. Die obere Grenze ihres Molekulargewichtes ist durch ihre Eigenschaft, wasserlöslich zu sein, gegeben. Eine zahlenmäßige Beschreibung der oberen Grenze ihres Molekulargewichtes ist nicht möglich, da diese stark von den zugrundeliegenden Polyaminen und der Zahl der in ihnen enthaltenen wasserlöslich-machenden Gruppen abhängt.

Bei der Verwendung der erfindungsgemäßen Polyamine als Hilfsmittel zur Erhöhung der Retention von Fasern, Füllstoffen und Pigmenten sowie als Entwässerungsbeschleunigungsmittel geht man in an sich bekannter Weise so vor, daß man die erfindungsgemäßen Polyamine in Form von verdünnter wäßriger Lösungen der Papierrohstoffsuspension vor dem Stoffauflauf zusetzt, wobei die Dosierstelle so gewählt wird, daß eine gute Verteilung des Hilfsmittels in der Rohstoffsuspension gesichert ist, aber eine zu lange Kontaktzeit vermieden wird. Die Mengen an Polyaminen, die zur Erzielung der gewünschten retentierenden Wirkung und/oder entwässerungsbeschleunigenden Wirkung erforderlich sind, lassen sich durch Vorversuche ohne Schwierigkeiten ermitteln; im allgemeinen empfiehlt es sich, 0,005 bis 0,5 Gewichtsprozent an Polyaminen, bezogen auf das Trockengewicht des Papiers, zu verwenden. Der Zusatz von erfindungsgemäßen Polyaminen vor dem Stoffauflauf einer

Papiermaschine wirkt sich außerdem vorteilhaft bei der Aufarbeitung der Papiermaschinenabwässer durch Filtration, Flotation oder Sedimentation aus; die koagulierende Wirkung der erfindungsgemäßen Polyamine erleichtert die Abtrennung von Papierstoffbestandteilen aus dem Papiermaschinenabwasser sehr wesentlich.

Bei der Verwendung der erfindungsgemäßen Polyamine als Hilfsmittel bei der Aufarbeitung von Papiermaschinenabwässern durch Filtration, Flotation oder Sedimentation kann man ebenfalls in an sich bekannter Weise vorgehen, bevorzugt in der Weise, daß man die in Betracht kommenden Umsetzungsprodukte in Form von verdünnten wäßrigen Lösungen dem Papiermaschinenabwasser zweckmäßig vor Eintritt in den Stoffänger zusetzt.

Die Mengen an Polyaminen, die eine ausreichende Koagulation der in Papiermaschinenabwässern enthaltenen Papierrohstoffbestandteile bewirken, sind nach der Zusammensetzung der Abwässer zu bemessen und lassen sich von Fall zu Fall durch Vorversuche leicht ermitteln; im allgemeinen sind hierfür Mengen von 0,005 bis 2 g Polyamin pro $m^3$ Abwasser ausreichend.

Die erfindungsgemäßen Polyamine zeigen im Vergleich zu ähnlichen bekannten Verbindungen (vgl. z. B. US-PS 3 966 684) im Anwendungsbereich von pH 4,0—8,0 eine Steigerung der retendierenden Wirksamkeit sowie der Entwässerungsbeschleunigung.

Die erfindungsgemäßen Polyamine sind überraschenderweise vor allem auch auf stark holzschliffhaltigem Papierrohstoff besonders wirksam.

Einige erfindungsgemäße Polyamine und ihre Verwendung zur Erhöhung der Retention von Fasern, Füllstoffen und Pigmenten sowie zur Entwässerungsbeschleunigung bei der Papierherstellung sind nachstehend beschrieben.

## Herstellungsbeispiele

### Herstellung der Polyharnstoffe A

#### Polyharnstoff 1

Eine Mischung aus 435 g Methyl-bis-(3-aminopropyl)amin und 180 g Harnstoff werden 1 Std. unter Rühren und Überleiten von Stickstoff auf 190° C erhitzt. Dann kühlt man auf 100° C ab und setzt so viel Wasser zu, daß man eine 50%ige wäßrige Lösung erhält.

Diese Lösung weist bei 25° C einen pH-Wert von 12,5, eine Viskosität von 560 mPas und ein Basenäquivalent von 340 auf.

#### Polyharnstoff 2

Eine Mischung aus 145 g Methyl-bis-(3-aminopropyl)amin, 129 g 2-Aminoethylpiperazin und 120 g Harnstoff werden unter Rühren und Überleiten von Stickstoff 5 Std. bei 140° C erhitzt. Man kühlt auf 120° C ab und setzt so viel Wasser zu, daß man eine 50%ige wäßrige Lösung erhält. Diese Lösung weist bei 25° C einen pH-Wert von 12,2, eine Viskosität von 2300 mPas und ein Basenäquivalent von 320 auf.

#### Polyharnstoff 3

Eine Mischung aus 129 g 2-Aminoethylpiperazin und 60 g Harnstoff wurden unter Rühren und Überleiten von Stickstoff 3 Std. bei 180° C erhitzt. Man kühlt auf 120° C ab und setzt so viel Wasser zu, daß man eine 50%ige wäßrige Lösung erhält. Diese Lösung weist bei 25° C einen pH-Wert von 11,2, eine Viskosität von 5000 mPas und ein Basenäquivalent von 308 auf.

#### Polyharnstoff 4

Eine Mischung aus 116 g Methyl-bis-(3-aminopropyl)amin, 15 g Ethylendiamin und 60 g Harnstoff werden unter Rühren und Überleiten von Stickstoff 8 Std. bei 130° C erhitzt. Man kühlt auf 120° C ab und setzt so viel Wasser zu, daß man eine 50%ige wäßrige Lösung erhält. Diese Lösung weist bei 25° C einen pH-Wert von 12,3, eine Viskosität von 318 mPas und ein Basenäquivalent von 320 auf.

#### Polyharnstoff 5

Eine Mischung aus 35 g Methyl-bis-(3-aminopropyl)amin, 15 g Ethylendiamin, 51 g Diethylentriamin und 60 g Harnstoff werden unter Rühren und Überleiten von Stickstoff innerhalb von 2 Std. auf 190° C erhitzt und weitere 2 Std. bei dieser Temperatur gerührt. Man kühlt auf 140° C ab und setzt so viel

Wasser zu, daß eine 50%ige wäßrige Lsg. resultiert. Diese Lösung weist bei 25°C einen pH-Wert von 12,3, eine Viskosität von 720 mPas und ein Basenäquivalent von 340 auf. Zu dieser Lösung gibt man 36 g Acrylsäure und 40 g 50%ige Kalilauge und erhitzt 8 Std. bei 60°C. Die Lösung weist dann eine Viskosität von 800 mPas bei 25°C auf.

Polyharnstoff 6

Eine Mischung aus 129 g 2-Aminoethylpiperazin, 30 g Ethylendiamin, 51 g Diethylentriamin und 120 g Harnstoff werden 5 Std. bei 160°C unter Rühren erhitzt. Man kühlt auf 120°C ab und setzt so viel Wasser zu, daß eine 50%ige Lösung resultiert. Zu dieser Lösung gibt man 49 g Maleinsäureanhydrid und 120 g 50%ige Kalilauge. Die so erhaltene Lösung weist bei 25°C eine Viskosität von 800 mPas auf.

Herstellung bzw. Zusammensetzung der Polyalkylenpolyamine B

Polyalkylenpolyamin 1

Aus dem durch kontinuierliche Umsetzung von Dichlorethan, wäßrigem Ammoniak und Ethylendiamin im Molverhältnis von 1 : 17 : 0,4 bei 160°—220°C und 100 bar erhaltenem Reaktionsgemisch wird unter Druck zunächst das überschüssige Ammoniak abgetrennt und dann bei 130—135°C mit überschüssiger 50%iger Natronlauge die entstandenen Basen aus ihren Hydrochloriden in Freiheit gesetzt. Dabei destilliert der größte Teil des Wassers und des Ethylendiamins ab, während sich die höhersiedenden Basen flüssig abscheiden. Das so erhaltene Basengemisch enthält neben 15—20% Wasser und 3—5% Ethylendiamin, etwa 15—20% Diethylentriamin, 2—3% Aminoethylpiperazin, ungefähr 1% $H_2N-CH_2-CH_2-NH-CH_2-CH_2-OH$, 15—18% Triethylentetramin, 3—4% Tetraethylentetramin, 10—14% Tetraethylenpentamin, 6—10% Pentaethylenhexamin sowie rund 10—15% höhere Polyethylenpolyamine und geringe Mengen an Kochsalz und Natriumhydroxid.

Polyalkylenpolyamin 2

Aus dem gemäß Beispiel 1 erhaltenen Basengemisch wird zunächst unter Normaldruck, dann unter vermindertem Druck von etwa 100 mbar das restliche Wasser, Ethylendiamin sowie der größte Teil des Diethylentriamins abdestilliert und das sich abscheidende Kochsalz durch Filtration entfernt.

Polyalkylenpolyamin 3

Aus dem gemäß Beispiel 1 erhaltenen Basengemisch wird außer Wasser, Ethylendiamin, Diethylentriamin noch der größte Teil des Triethylentetramins bei einem Endvakuum von etwa 10—15 Torr destillativ abgetrennt und die sich abscheidenden Anorganika ebenfalls durch Filtration entfernt, wobei die Filtration durch Zusatz von Kieselgur erleichtert und das Amingemisch durch Verwendung von A-Kohle merklich aufgehellt werden kann.
Umsetzungsprodukte von Polyamidaminen A und Polyalkylenpolyaminen B mit polyfunktionellen Verbindungen C zu den erfindungsgemäßen »Harnstoffgruppenhaltigen Polyaminen«.

Polyamin 1

Zu 100 g Wasser, 55 g Polyharnstoff A 1) und 38 g Tetraethylenpentamin setzt man bei 90°C 35 g Dichlorethan und 30 g 40%ige Natronlauge zu. Man rührt bei dieser Temperatur so lange, bis eine Viskosität von 350 mPas erreicht ist. Man kühlt dann ab auf Raumtemperatur, versetzt mit so viel konz. Salzsäure, daß sich ein pH-Wert von 5 einstellt und destilliert im Vakuum nicht umgesetztes Dichlorethan ab. Man setzt so viel Wasser zu, daß sich eine 25%ige Lösung, bezogen auf Wirkstoffgehalt, ergibt. Diese Lösung weist bei 25°C eine Viskosität von 340 mPas auf.

Polyamin 2

Wie Polyamin 1, man setzt jedoch 55 g Polyharnstoff A 1), 58 g Tetraethylenpentamin, 45 g Dichlorethan und 40 g 50%ige Kalilauge ein. Das auf einen pH von 5 eingestellte 25%ige Polyamin 2 weist eine Viskosität von 320 mPas bei 25°C auf.

Polyamin 3

Zu 80 g Wasser, 50 g Polyharnstoff A 1) und 50 g Polyalkylen B 1) setzt man bei 90° C 45 g Dichlorethan und 20 g 50%ige Kalilauge zu. Man rührt bei dieser Temperatur so lange, bis eine Viskosität von 400 mPas erreicht ist. Man kühlt ab, destilliert nicht umgesetztes Dichlorethan im Vakuum ab, stellt einen pH-Wert von 5 mit konz. Salzsäure ein und setzt so viel Wasser zu, daß eine 25%ige Lösung bezogen auf Wirkstoffgehalt resultiert. Diese Lösung weist eine Viskosität von 250 mPas bei 25° C auf.

Polyamin 4

Zu 80 g Wasser, 60 g Polyharnstoff A 2) und 60 g Polyalkylenpolyamin B 1) setzt man bei 90° C 40 g Dichlorethan und 20 g 40%ige Natronlauge zu. Man rührt bei dieser Temperatur so lange, bis eine Viskosität von 500 mPas erreicht ist. Man kühlt ab, destilliert nicht umgesetztes Dichlorethan im Vakuum ab, stellt pH 6 mit konz. Salzsäure ein und setzt so viel Wasser zu, daß eine 25%ige Lösung bezogen auf Wirkstoffgehalt resultiert. Diese Lösung weist eine Viskosität von 250 mPas bei 25° C auf.

Polyamin 5

Zu 120 g Wasser, 50 g Polyharnstoff A 3) und 35 g Polyalkylenpolyamin B 3) setzt man bei 75° C 30 g Dichlorethan und 30 g 50%ige Kalilauge zu. Man rührt bei dieser Temperatur so lange, bis eine Viskosität von 700 mPas erreicht ist. Man kühlt ab, destilliert nicht umgesetztes Dichlorethan im Vakuum ab und setzt so viel Wasser zu, daß eine 25%ige Lösung bezogen auf Wirkstoffgehalt resultiert. Diese Lösung weist eine Viskosität von 900 mPas bei 25° C auf.

Polyamin 6

Zu 100 g Wasser, 45 g Polyharnstoff A 4) und 20 g Tetraethylenpentamin setzt man bei 90° C 35 g Dichlorethan zu. Man rührt bei dieser Temperatur so lange, bis eine Viskosität von 50 mPas erreicht ist und kühlt dann auf 70° C ab. Bei dieser Temperatur kondensiert man bis zu einer Viskosität von 400 mPas, setzt 30 g konz. Salzsäure zu, kühlt ab und stellt mit weiterer Salzsäure pH 5 ein. Man destilliert überschüssiges Dichlorethan ab und stellt eine 25%ige Lösung bezogen auf Wirkstoffgehalt ein. Die Lösung weist bei 25° C eine Viskosität von 360 mPas auf.

Polyamin 7

Zu 100 g Wasser, 50 g Polyharnstoff A 1) und 40 g Tetraethylenpentamin setzt man 15 Epichlorhydrin zu. Man kondensiert bei 40° C bis zu einer Viskosität von 250 mPas und setzt weitere 50 g Wasser zu. Man stellt mit konz. Salzsäure einen pH-Wert von 4 ein und gibt so viel Wasser zu, daß eine 25%ige Lösung resultiert. Diese Lösung weist eine Viskosität von 220 mPas auf.

Polyamin 8

Zu 200 g Wasser, 120 g Polyharnstoff A 5) und 40 g Polyalkylenpolyamin B 3) setzt man bei 100° C 60 g Dichlorethan und 60 g 50%ige Kalilauge zu. Man kondensiert bei 100° C bis zu einer Viskosität von 250 mPas. Man kühlt ab, stellt mit konz. HCl pH 5 ein, destilliert nicht umgesetztes Dichlorethan ab und setzt so viel Wasser zu, daß sich eine 25%ige Lösung bezogen auf Wirkstoffgehalt mit einer Viskosität von 340 mPas bei 25° C ergibt.

Polyamin 9

100 g Wasser, 50 g Polyharnstoff A 6), 50 g Polyalkylenpolyamin B 2) und 40 g Dichlorethan werden in einem Rührautoklaven bei einem Druck bis 6 bar und 120° C 1 Std. gerührt. Nach dem Entspannen füllt man mit Wasser auf eine 25%ige Lösung auf. Diese Lösung weist bei 25° C eine Viskosität von 800 mPas auf.

Anwendungsbeispiel 1

Auf einer Laborpapiermaschine (Typ Kämmerer) wurden aus 70% gebleichtem Nadelholzsulfitzellstoff und 30% gebleichtem Buchensulfatzellstoff Papiere (ca. 80 g/m²) hergestellt. Dabei wurde einmal im sauren Bereich, zum anderen bei neutralen pH-Werten gearbeitet:

a) Saurer Bereich:

Zusatz von 30% China Clay als Füllstoff,
1% Harzleim und
3% Aluminiumsulfat

zur Papiermasse. Der pH-Wert wurde mit Schwefelsäure auf 4,8 eingestellt.

b) Neutraler Bereich:

Zusatz von 30% Calciumcarbonat als Füllstoff,
1% Aquapel 360 XZ (synthetischer Leim auf Basis Stearyldiketen von Fa. Hercules Inc.)

zur Papiermasse. Der pH-Wert wurde mit Natronlauge auf 7,8 bis 8 eingestellt.

Vor dem Stoffauflauf der Papiermaschinen wurden mittels Dosierpumpe die 1%igen wäßrigen Lösungen der 25%igen Polyamine 1 bis 7 zudosiert. Zum Vergleich wurden ebenfalls 1%ige Verdünnungen des bekannten Retentionsmittels Polyharnstoff I gemäß Beispiel 15 der US-A-3 966 684 bzw. des bekannten Retentionsmittels Polyethylenpolyamin II (US-PS 3 972 939, Beispiel 1) sowie Mischungen von I : II im Verhältnis von 75 : 25, 50 : 50 sowie 25 : 75% zudosiert.

Als Maß für die Retentionswirkung wurde der Feststoffgehalt im Abwasser der Papiermaschine bestimmt. Je geringer dieser Feststoffgehalt, um so besser ist die Retentionswirkung.

Die folgende Tabelle 1 veranschaulicht, daß die erfindungsgemäßen Polyamine sowohl im sauren wie im neutralen Bereich eine sehr gute Retentionswirkung besitzen und daß diese besser ist als diejenige, die bei Einsatz von Mischungen von Polyharnstoff und Polyethylenpolyamin-Retentionsmitteln erhalten wird. Die Zusatzmengen beziehen sich jeweils auf das Gewicht des lufttrockenen Zellstoffes sowie auf die 25%ige Lösung des Retentionsmittels.

Tabelle 1

| Retentionsmittel | Zusatzmenge % | Trockenrückstand im Abwasser mg/l | |
|---|---|---|---|
| | | a) saurer Bereich pH 4,8 | b) neutraler Bereich pH 7,8 |
| ohne | | 643 | 785 |
| Polyamin 1 | 0,1 | 182 | 181 |
| Polyamin 2 | 0,1 | 171 | 161 |
| Polyamin 3 | 0,1 | 195 | 190 |
| Polyamin 4 | 0,1 | 186 | 192 |
| Polyamin 5 | 0,1 | 188 | 195 |
| Polyamin 6 | 0,1 | 165 | 1 |
| Polyamin 7 | 0,1 | 187 | 184 |
| Polyamin 8 | 0,1 | 185 | 188 |
| Polyamin 9 | 0,1 | | |
| I | 0,1 | 213 | 312 |
| II | 0,1 | 219 | 197 |
| Gemisch 75% I<br>25% II | 0,1 | 203 | 286 |
| Gemisch 50% I<br>50% II | 0,1 | 208 | 271 |
| Gemisch 25% I<br>75% II | 0,1 | 212 | 235 |

Anwendungsbeispiel 2

Als Maß für die auf einer Papiermaschine der Praxis zu erwartende Entwässerungsbeschleunigung wurde der Mahlgrad nach Schopper-Riegler bestimmt. Je stärker der Mahlgrad durch das zugesetzte Retentionsmittel erniedrigt wird, um so besser ist die zu erwartende Entwässerungsbeschleunigung.

Ein weiteres Maß für die auf einer Papiermaschine zu erwartende Entwässerungsbeschleunigung ist die sogenannte Entwässerungszeit. Diese wird bestimmt, indem im Mahlgradprüfer nach Schopper-Riegler die Zeit gemessen wird, welche zur Einstellung eines bestimmten Mahlgrades bzw. Wasservolumens im Auslaufbecher erforderlich ist. Je kürzer diese Zeit ist, um so besser ist die erzielbare Entwässerungsbeschleunigung.

Ein Stoffgemisch aus 30 Gew.-Teilen ungebl. Sulfat, 40 Gew.-Teilen Clay und 70 Gew.-Teilen Holzschliff wurde am Schnellrührer aufgeschlagen und der pH-Wert eingestellt:

a) Saurer Bereich:
   Zusatz von 0,5% Aluminiumsulfat, Einstellung von pH 5,2 mit Schwefelsäure.
b) Neutraler Bereich:
   Einstellung von pH 7,2 mit Natronlauge.

Zu 200 ml der nach a) oder b) vorbereiteten 1%igen Papierstoff-Suspension wurde jeweils die 1%ige Lösung mit Wasser auf 1000 ml aufgefüllt und mit Hilfe des Schopper-Riegler-Gerätes der Mahlgrad bestimmt.

Die Zusatzmengen beziehen sich jeweils auf das Gewicht des lufttrockenen Papierstoffes sowie auf die 25%ige Lösung der Polyamine 1 bis 7.

Die folgende Tabelle 2 veranschaulicht den guten Entwässerungseffekt der erfindungsgemäßen Polyalkylenpolyamine sowohl im sauren als auch im neutralen Bereich. Zum Vergleich wurden ebenfalls die im Anwendungsbeispiel 1 aufgeführten bekannten Retentionsmittel zudosiert.

Neben dem Mahlgrad ist in den Tabellen die Entwässerungszeit in sec aufgeführt, die bis zum Erreichen eines bestimmten Mahlgrades notwendig war. Dieser Mahlgrad sollte wenig unter dem Mahlgrad des Papierbreis ohne Zusatz eines Retentionsmittels liegen.

Wird bei der Tabelle 2 bei jedem einzelnen Produkt die Gesamteigenschaft im sauren, im schwach alkalischen Milieu, bei 0,1 und 0,2% Zusatz zusammen betrachtet, so ergibt sich bei den erfindungsgemäßen Produkten eine bessere Entwässerungsbeschleunigung als bei den bekannten.

Tabelle 2

30 Gew.-Teile ungebl. Sulfat
70 Gew.-Teile Holzschliff
40 Gew.-Teile Clay

| Beispiel | pH 7,5 | | | pH 5,2 + 0,5 % Alaun + $H_2SO_4$ | |
|---|---|---|---|---|---|
| | Zusatz in % | Mahlgrad [°SR] | Entwässerung [sec] bei 65°SR | Mahlgrad [°SR] | Entwässerung [sec] bei 55°SR |
| ohne | | 68 | 117 | 58 | 110,5 |
| 1 | 0,1 | 50 | 65,8 | 50 | 69,5 |
| | 0,2 | 40 | 63,2 | 46 | 50,7 |
| 2 | 0,1 | 49 | 68,4 | 51 | 69,4 |
| | 0,2 | 48 | 62,2 | 47 | 51,4 |
| 3 | 0,1 | 49 | 67,6 | 49 | 67,8 |
| | 0,2 | 47 | 64,1 | 46 | 50,7 |
| 4 | 0,1 | 51 | 68,9 | 52 | 67,5 |
| | 0,2 | 48 | 64,5 | 47 | 49,3 |
| 5 | 0,1 | 50 | 70,0 | 50 | 67,4 |
| | 0,2 | 48 | 63,8 | 46 | 51,2 |
| 6 | 0,1 | 51 | 69,5 | 50 | 71,1 |
| | 0,2 | 49 | 59,2 | 45 | 53,0 |
| 7 | 0,1 | 49 | 67,5 | 49 | 68,4 |
| | 0,2 | 47 | 62,9 | 47 | 51,6 |
| 8 | 0,1 | 49 | 67,5 | 49 | 70,2 |
| | 0,2 | 48 | 64,6 | 46 | 49,3 |
| 9 | 0,1 | 50 | 68,0 | 49 | 69,8 |
| | 0,2 | 48 | 63,8 | 47 | 50,1 |
| I | 0,1 | 53 | 75,2 | 51 | 74,9 |
| | 0,2 | 50 | 68,4 | 50 | 55,8 |
| II | 0,1 | 51 | 68,9 | 53 | 76,9 |
| | 0,2 | 49 | 64,3 | 52 | 58,7 |
| Gemisch 50% } | 0,1 | 52 | 70,2 | 52 | 75,8 |
| 50% } | 0,2 | 50 | 66,2 | 51 | 56,8 |

## Patentansprüche

1. Nicht vernetzende wasserlösliche Polyamine, erhalten durch Umsetzung von

A) basischen Polyharnstoffen, welche durch Kondensation von 1 Mol Harnstoff mit 0,7 bis 1,5 Mol Polyaminen, die
   a) mindestens drei Aminogruppen enthalten, von denen wenigstens eine eine tertiäre Aminogruppe ist, oder
   b) mit Mischungen dieser Polyamine a) mit zwei primären oder zwei sekundären Aminogruppen oder eine primäre und eine sekundäre Aminogruppe enthaltenden aliphatischen, araliphatischen, cycloaliphatischen oder heterocyclischen Polyaminen oder
   c) mit Polyaminmischungen aus a) oder a) und b) im weiteren Gemisch mit bis 0,5 Mol Polyalkylenpolyaminen der Reihe Diethylentriamin, Triethylentetramin und höhere Homologe, Dipropylentriamin, Tripropylentetramin und höhere Homologe pro Mol Harnstoff und anschließende Addition von ungesättigten Verbindungen wie Acrylsäure, Maleinsäureanhydrid oder Acrylamid an deren sekundäre Aminogruppe sowie gegebenenfalls mit mindestens drei Kohlenstoffatomen enthaltenden ω-Aminocarbonsäuren oder deren Lactamen

   hergestellt worden sind,

B) Polyalkylenpolyaminen der allgemeinen Formel

$$H_2N-\left[CH_2-\underset{\displaystyle R}{\underset{|}{CH}}-(CH_2)_y-NH\right]_x-H$$

in der

R H oder $CH_3$
y gleich oder verschieden die Zahl 0 oder 1 und
x eine Zahl von 4 bis 2500 bedeuten

oder Mischungen dieser Polyalkylenpolyamine (I) mit Aminen der gleichen Formel (II), in der x eine Zahl von 1 bis 3 bedeutet oder Mischungen dieser Polyalkylenpolyamine I oder I und II mit weiteren mehrwertigen Aminen und

C) gegenüber Aminogruppen polyfunktionellen Verbindungen,
wobei die basischen Harnstoffe A und die Polyalkylenpolyamine B in Gewichtsverhältnissen von 1 bis 10 : 10 bis 1 eingesetzt werden.

2. Nicht vernetzende, wasserlösliche Polyamine gemäß Anspruch 1, dadurch gekennzeichnet, daß sie ein mittleres Molekulargewicht von über 5000 aufweisen.

3. Polyamine gemäß Ansprüche 1 und 2, dadurch gekennzeichnet, daß die Umsetzung der Reaktionspartner A, B und C in wäßrigem Medium bei Temperaturen von 0 bis 140°C, einer Gesamtkonzentration von 10—60% und pH-Werten oberhalb von 6 vorgenommen werden.

4. Polyamine gemäß Ansprüchen 1 bis 3, dadurch gekennzeichnet, daß die Reaktion bei Drücken von 0 bis 50 bar, insbesondere bei 3 bis 8 bar durchgeführt wird.

5. Verfahren zur Herstellung von wasserlöslichen Aminen, dadurch gekennzeichnet, daß die Reaktionspartner A, B und C gemäß Anspruch 1 miteinander umgesetzt werden.

6. Verwendung der wasserlöslichen Polyamine nach Anspruch 1 als Hilfsmittel zur Erhöhung der Retention von Fasern, Füllstoffen und Pigmenten sowie als Entwässerungsbeschleunigungsmittel bei der Papierherstellung und zur Aufarbeitung von Papiermaschinenabwässern durch Filtration, Sedimentation und Flotation.

7. Hilfsmittel zur Erhöhung der Retention von Fasern, Füllstoffen und Pigmenten sowie Entwässerungsbeschleunigungsmittel bei der Papierherstellung und zur Aufarbeitung von Papiermaschinenabwässern durch Filtration, Sedimentation und Flotation, enthaltend als wirksamen Bestandteil wasserlösliche Polyamine gemäß Anspruch 1.

## Claims

1. Non-crosslinking, water-soluble polyamines obtained by reacting

A) basic polyureas which have been prepared by coundensation of 1 mol of urea with 0.7 to 1.5 mols of polyamines which
   a) contain at least three amino groups of which at least one is a tertiary amino group, or
   b) with mixtures of these polyamines a) with aliphatic, araliphatic, cycloaliphatic or heterocyclic

polyamines containing two primary or two secondary amino groups or one primary and one secondary amino group, or

c) with polyamine mixtures of a) or a) and b) in further admixture with up to 0.5 mol of polyalkylenepolyamines of the series comprising diethylenetriamine, triethylenetetramine and higher homologues, dipropylenetriamine, tripropylenetetramine and higher homologues, per mol of urea, and subsequent addition of unsaturated compounds such as acrylic acid, maleic anhydride or acrylamide onto their secondary amino groups and optionally with ω-aminocarboxylic acids containing at least three carbon atoms or lactams thereof,

B) polyalkylenepolyamines of the general formula

$$H_2N-\left[CH_2-\underset{\displaystyle R}{\underset{|}{C}H}-(CH_2)_y-NH\right]_x-H$$

in which

R denotes H or $CH_3$,
the indices y are in each case identical or different and denote the number 0 or 1 and
x denotes a number from 4 to 2500,
or mixtures of these polyalkylenepolyamines (I) with amines of the same formula (II), in which x denotes a number from 1 to 3, or mixtures of these polyalkylenepolyamines I or I and II with other polyacidic amines and

C) compounds which are polyfunctional towards amino groups,
the basic ureas A and the polyalkylenepolyamines B being employed in weight ratios of 1 to 10 : 10 to 1.

2. Non-crosslinking, water-soluble polyamines according to Claim 1, characterised in that they have an average molecular weight greater than 5000.

3. Polyamines according to Claims 1 and 2, characterised in that the reactants A, B and C are reacted in an aqueous medium at temperatures of 0 to 140°C, in a total concentration of 10—60% and at pH values above 6.

4. Polyamines according to Claims 1 to 3, characterised in that the reaction is carried out under pressures of 0 to 50 bars, in particular under 3 to 8 bars.

5. Process for the preparation of water-soluble amines, characterised in that the reactants A, B and C according to Claim 1 are reacted with one another.

6. Use of the water-soluble polyamines according to Claim 1 as auxiliaries for increasing the retention of fibres, fillers and pigments and as drainage acceleration agents in the production of paper and for working up effluents from paper machines by filtration, sedimentation and flotation.

7. Auxiliaries for increasing the retention of fibres, fillers and pigments and drainage acceleration agents in the production of paper and for working up effluents from paper machines by filtration, sedimentation and flotation, containing, as the active constituent, water-soluble polyamines according to Claim 1.

**Revendications**

1. Polyamines hydrosolubles non réticulantes, obtenues par réaction

A) de polyurées basiques qui ont été préparées par condensation d'une mole d'urée avec 0,7 à 1,5 mole de polyamines, qui
   a) contiennent au moins trois groupes amino dont l'un au moins est un groupe amino tertiaire, ou
   b) avec des mélanges de ces polyamines a) avec des polyamines aliphatiques, araliphatiques, cycloaliphatiques ou hétérocycliques contenant deux groupes amino primaires ou deux groupes amino secondaires ou un groupe amino primaire et un groupe amino secondaire, ou
   c) avec des mélanges de polyamines du groupe a) ou des groupes a) et b) mélangées en outre avec jusqu'à 0,5 mole de polyalkylènepolyamines de la série diéthylènetriamine, triéthylènetétramine et des homologues supérieurs, dipropylènetriamine, tripropylènetétramine et les homologues supérieurs, par mole d'urée, et addition subséquente de composés non saturés tels que l'acide acrylique, l'anhydride d'acide maléique ou l'acrylamide sur leur groupe amino secondaire, ainsi que, le cas échéant, avec des acides ω-aminocarboxyliques comportant au moins trois atomes de carbone ou leurs lactames,

B) de polyalkylènepolyamines de formule générale

$$H_2N-\left[CH_2-\underset{\displaystyle R}{\underset{|}{C}}H-(CH_2)_y-NH\right]_x-H$$

dans laquelle

R représente H ou $CH_3$
les indices y sont égaux ou différents et représentent le nombre 0 ou le nombre 1 et
x est un nombre de 4 à 2500

ou des mélanges de ces polyalkylènepolyamines (I) avec des amines de même formule (II), dans laquelle x est un nombre de 1 à 3 ou des mélanges de ces polyalkylènepolyamines I ou I et II avec d'autres amines polyvalentes et

C) des composés polyfonctionnels du point de vue des groupes amino,
les urées A basiques et les polyalkylènepolyamines B étant utilisées dans des rapports en poids de 1 à 10 : 10 à 1.

2. Polyamines hydrosolubles non réticulantes suivant la revendication 1, caractérisées en ce qu'elles ont un poids moléculaire moyen de plus de 5000.

3. Polyamines suivant les revendications 1 et 2, caractérisées en ce que la réaction des partenaires réactionnels A, B et C est conduite en milieu aqueux à des températures de 0 à 140°C, à une concentration totale de 10—60% et à des valeurs de pH supérieurs à 6.

4. Polyamines suivant les revendications 1 à 3, caractérisées en ce que la réaction est conduite à des pressions de 0 à 50 bars, notamment de 3 à 8 bars.

5. Procédé de production d'amines hydrosolubles, caractérisé en ce qu'on fait réagir ensemble les partenaires réactionnels A, B et C suivant la revendication 1.

6. Utilisation des polyamines hydrosolubles suivant la revendication 1 comme adjuvants pour accroître la rétention de fibres, de charges et de pigments ainsi que comme agents d'accélération de l'égouttage dans la fabrication du papier et pour le traitement d'eaux résiduaires de machines à papier par filtration, sédimentation et flottation.

7. Adjuvants pour accroître la rétention de fibres, de charges et de pigments ainsi que pour accélérer l'égouttage dans la fabrication du papier et pour le traitement d'eaux résiduaires de machines à papier par filtration, sédimentation et flottation, contenant comme composant actif des polyamines hydrosolubles suivant la revendication 1.